## Europäisches Patentamt
## European Patent Office
## Office européen des brevets

(11) Veröffentlichungsnummer: **0 316 830 B1**

(12) **EUROPÄISCHE PATENTSCHRIFT**

(45) Veröffentlichungstag der Patentschrift: **11.12.91**

(51) Int. Cl.⁵: **A01G 23/04**

(21) Anmeldenummer: **88118911.2**

(22) Anmeldetag: **12.11.88**

(54) **Einzelballen-Aushebe- und Reihenrodegerät.**

(30) Priorität: 16.11.87 DE 3738823
14.12.87 DE 3743582
01.02.88 DE 3802844
24.02.88 DE 3834015
03.06.88 DE 3819014
30.09.88 DE 3833269

(43) Veröffentlichungstag der Anmeldung:
**24.05.89 Patentblatt 89/21**

(45) Bekanntmachung des Hinweises auf die
Patenterteilung:
**11.12.91 Patentblatt 91/50**

(84) Benannte Vertragsstaaten:
**AT BE CH DE ES FR GB GR IT LI LU NL SE**

(56) Entgegenhaltungen:
**EP-A- 0 060 537**
**WO-A-79/00575**
**DE-A- 2 516 921**
**DE-A- 3 543 344**
**US-A- 2 410 203**
(73) Patentinhaber: **Heitzler, Karl**
**Herrengässle 4**
**W-7801 Umkirch(DE)**

(72) Erfinder: **Heitzler, Karl**
**Herrengässle 4**
**W-7801 Umkirch(DE)**

(74) Vertreter: **Patentanwälte Dipl.-Ing. Hans**
**Schmitt Dipl.-Ing. Wolfgang Maucher**
**Dreikönigstrasse 13**
**W-7800 Freiburg i.Br.(DE)**

## Beschreibung

Die Erfindung betrifft ein Einzelballen-, Aushebe- und Reihenrode-gerät mit einem Unterschneidemesser, welches in Eindringrichtung schwenkbar um eine etwa horizontale Achse gelagert ist, insbesondere zum Herauslösen des Wurzelwerkes von Pflanzen in Baumschulen oder dergleichen, wobei ein Zusatzantrieb für eine die Schwenkbewegung überlagende oszillierende Bewegung des Unterschneidemessers vorgesehen ist.

Es sind bereits sogenannte Unterschneide-Rüttelpflüge bekannt, bei denen ein Rodemesser in schwingende Bewegung versetzt wird und unter dem Wurzelwerk von Pflanzreihen hindurch gezogen wird. Dieses Gerät ist im wesentlichen als Pflug ausgebildet und eignet sich nur für durchgehende Pflanzreihen.

Außerdem kennt man bereits Geräte mit einem schwenkbaren Unterschneidemesser, welches unter dem Wurzelballen einer Pflanze hindurch gedrückt wird.

In der Praxis hat es sich gezeigt, daß insbesondere bei schwieragen Boden- und Wurzelverhältnissen ein erheblicher Kraftaufwand für die Schwenkbewegung des Unterschneidemessers erforderlich ist. Dementsprechend sind starke Antriebe und auch stabile Widerlager zum Halten des Gerätes erforderlich. Insbesondere bei Anbau an ein Fahrzeug muß dieses entsprechend schwer und stabil sein.

Die US-A- 2 410 203 zeigt auch bereits ein Gerät der eingangs erwähnten Art. Bei diesem weist das Unterschneidemesser ein Sägeblatt auf, welches quer zur Eindringrichtung hin- und herbewegbar ist. Dieses Sägeblatt ist in eine Nut einer bügelförmigen Sägeblattführung eingesetzt, die mit ihrer das Sägeblatt aufnehmenden, offenen Seite nach vorne gegen das zu durchdringende Erdreich weist.

Aufgabe der vorliegenden Erfindung ist es, das Eindringen des Unterschneidemessers auch unter schwierigen Boden- und Wurzelverhältnissen zu erleichtern, so daß u.a. auch der Einsatz dieses Gerätes in Verbindung mit üblichen Fahrzeugen, insbesondere Schleppern, möglich ist.

Zur Lösung dieser Aufgabe wird vorgeschlagen, daß der Zusatzantrieb derart ausgebildet ist, daß das Unterschneidemesser in Eindringrichtung vor- und zurückbewegbar ist oder daß das Unterschneidemesser, in Eindringrichtung an seiner Vorderseite, wenigstens eine, um eine Achse quer zur Eindringrichtung bewegliche Schneide aufweist, die durch den Zusatzantrieb in eine Wippbewegung versetzbar ist.

Die überlagerte Bewegung kann dabei einzeln oder in Kombination eine oszillierende, schwingende oder schlagende Bewegung sein. Eine solche Zusatzbewegung des Unterschneidemessers ermöglicht ein leichtes Eindringen auch in schwere Böden.

Mit dem Gerät kann in zwei unterschiedlichen Techniken gearbeitet werden. Zum einen kann das Unterschneidemesser längs zur Fahrtrichtung für kleinere Wurzelballen und andererseits quer zur Fahrtrichtung für größere Wurzelballen eingesetzt werden. Insbesondere können mit diesem Gerät Wurzelballen einzelner Pflanzen aus der Pflanzenreihe herausgehoben werden, ohne daß die Wurzeln der nebenstehenden Pflanzen unterschnitten werden.

Weiterhin kann nach einem Vorschlag der Erfindung vorgesehen sein, daß das Unterschneidemesser durch wenigstens zwei geteilte Einheiten gebildet ist und daß jede Seite einen separaten Schwenkantrieb sowie ggf. einen separaten Zusatzantrieb für die überlagerte Bewegung der Messer bzw. seiner Schneiden aufweist.. Durch diese zweigeteilte Ausbildung des Unterschneidemessers können die Messerteile unabhängig voneinander una insbesondere auch nacheinander verschwenkt werden wodurch die notwendigen Haltekräfte für das Gerät entsprechend reduziert sind. Dabei können die Teilmesser schrittweise nacheinander oder aber jeweils in einem Durchlauf bewegt werden.

Nach einer Weiterbildung der Erfindung ist vorgesehen, daß die voneinander getrennten Messereinheiten gegenläufig mit entgegengesetzten Vorschub-Schwenkrichtungen ausgebildet sind. Durch diese gegenläufige Vorschubrichtung der Teilmesser erfolgt praktisch eine interne Kompensation der auftretenden Reaktionskräfte, so daß für das gesamte Gerät nur noch geringe äußere Haltekräfte erforderlich sind.

Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt:

Fig. 1
eine perspektivische Ansicht eines Einzelballen-, Aushebe- und Reihenrodegerätes,

Fig. 2
eine Rückseitenansicht des Gerätes mit Anbau des Aushebemessers längs zur Fahrtrichtung,

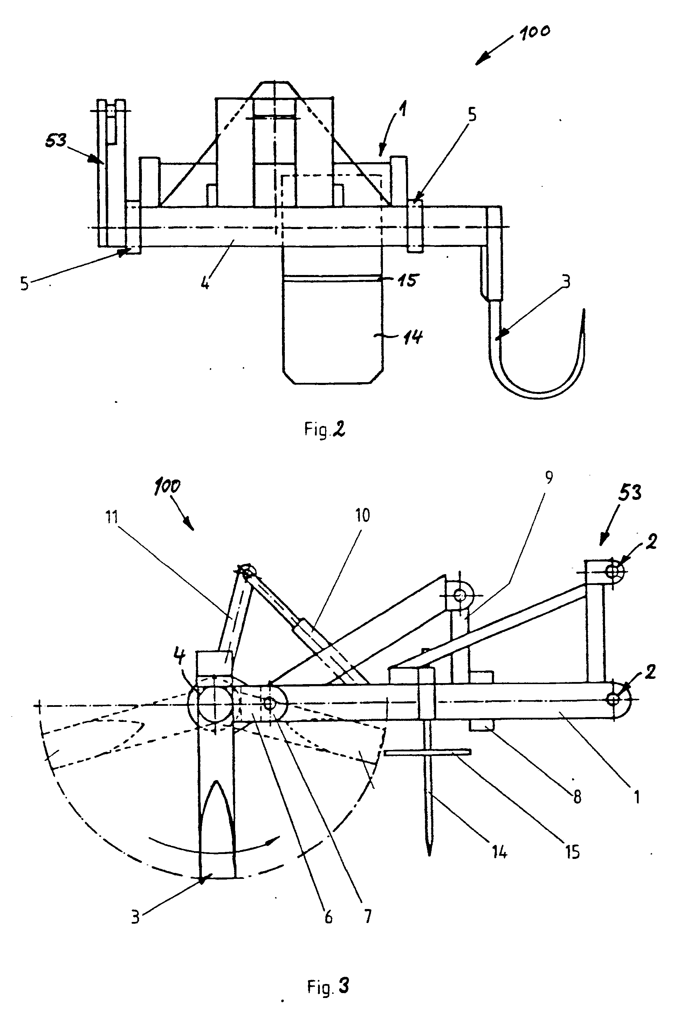

Fig. 3
eine Seitenansicht des in Fig. 2 gezeigten Gerätes.

Fig. 4
eine Rückseitenansicht des Gerätes mit Anbau des Aushebemessers quer zur Fahrtrichtung,

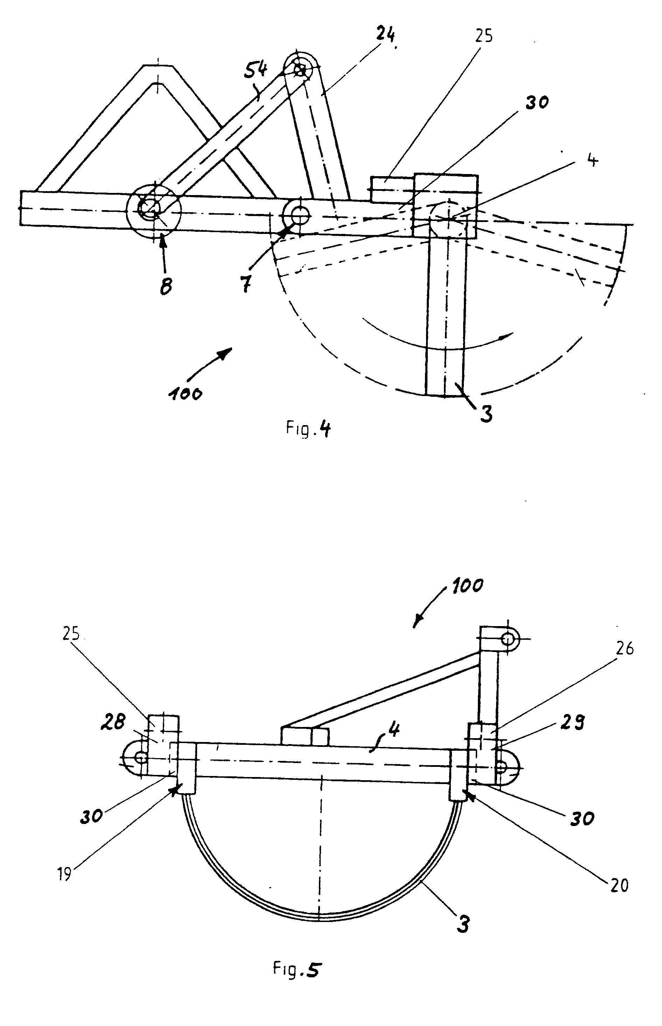

Fig. 5
eine Seitenansicht des in Fig. 4 gezeigten Gerätes,

Fig. 6
eine Rückseitenansicht eines Gerätes mit in Ein-

und Ausschwenklage dargestellten Aushebemesser,

Fig. 7
eine etwa mit Fig. 2 vergleichbare Ansicht des Gerätes, hier jedoch ausgerüstet mit einer Unwuchtwelle,

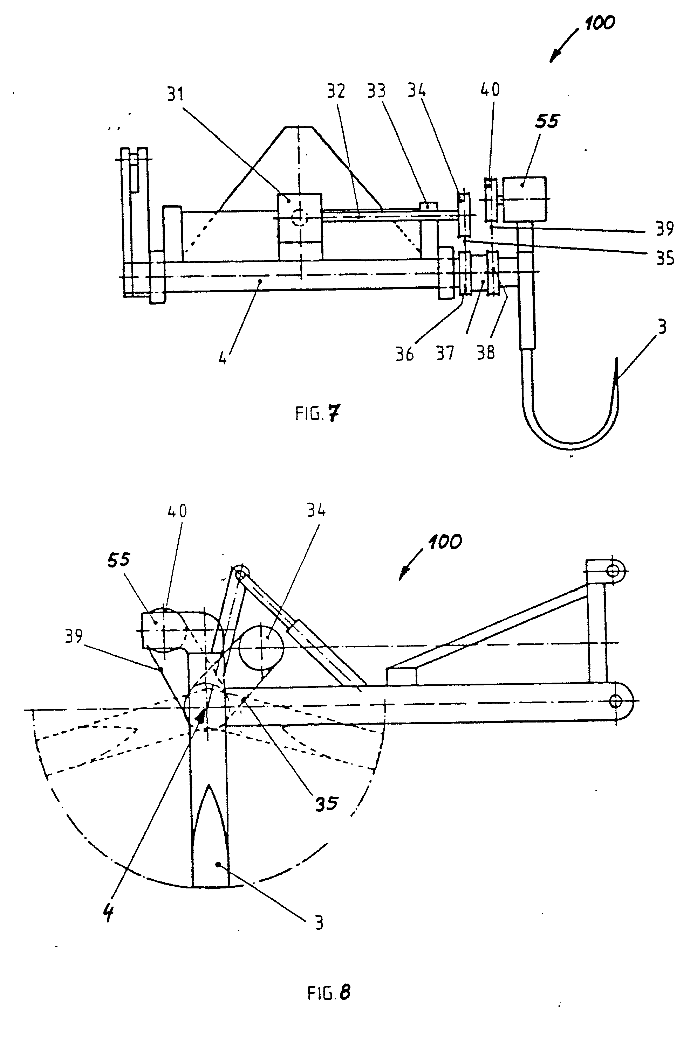

Fig. 8
eine Seitenansicht des in Fig. 7 gezeigten Gerätes,

Fig. 9
eine Rückseitenansicht des Gerätes mit. Unwuchtwelle mit Anbau des Unterschneide- bzw. Aushebemessers quer zur Fahrtrichtung,

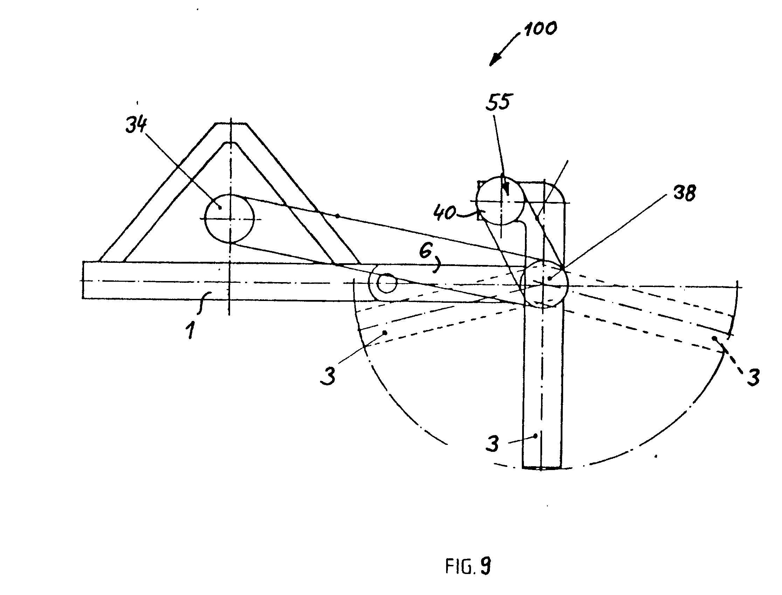

Fig. 10
eine Seitenansicht des in Fig. 9 gezeigen Gerätes,

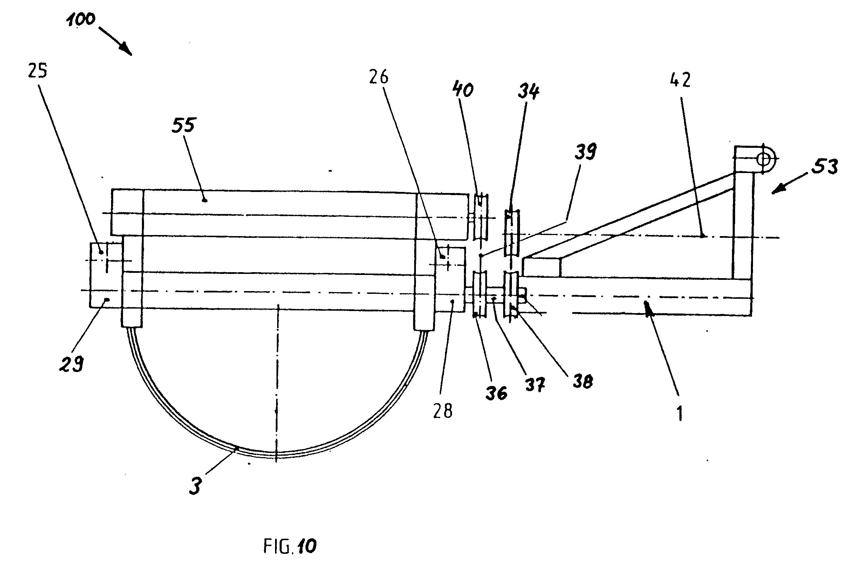

Fig. 11
eine Aufsicht des in Fig. 9 und 10 gezeigten Gerätes,

Fig. 12
eine Seitenansicht eines Gerätes mit längs zur Fahrtrichtung angeordnetem Unterschneidemesser,

Fig. 13
eine Aufsicht eines Gerätes mit Anordnung des Unterschneidemessers quer zur Fahrtrichtung,

Fig. 14
eine Rückseitenansicht eines Gerätes mit einer kranartigen Hebeeinrichtung in Arbeitsstellung,

Fig. 15
eine perspektivische Seitenansicht eines Unterschneidemessers mit bewegbarer Schneide und Antrieb dafür,

Fig. 16 und 17
unterschiedliche Seitenansichten der in Fig. 15 gezeigten Anordnung,

Fig. 18
eine Seitenansicht eines Gerätes mit Schwenkkran sowie Rammhammer,

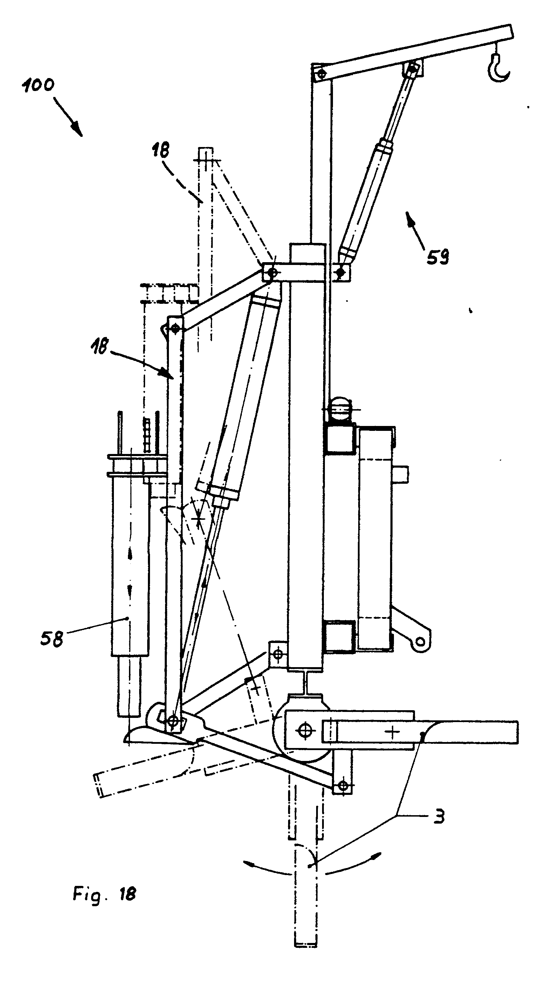

Fig. 19
eine Rückseitenansicht des in Fig. 18 gezeigten Gerätes mit zusätzlich daran angebrachtem Schneckeneindrehanker,

Fig. 20
eine Seitenansicht eines Schneckeneindrehankers mit Antrieb,

Fig. 21
eine abgewandelte Ausführungsform eines erfindungsgemäßen Gerätes mit geteiltem Unterschneidemesser und Auflockerungssporn mit Anordnung des Unterschneidemessers quer zur Fahrtrichtung,

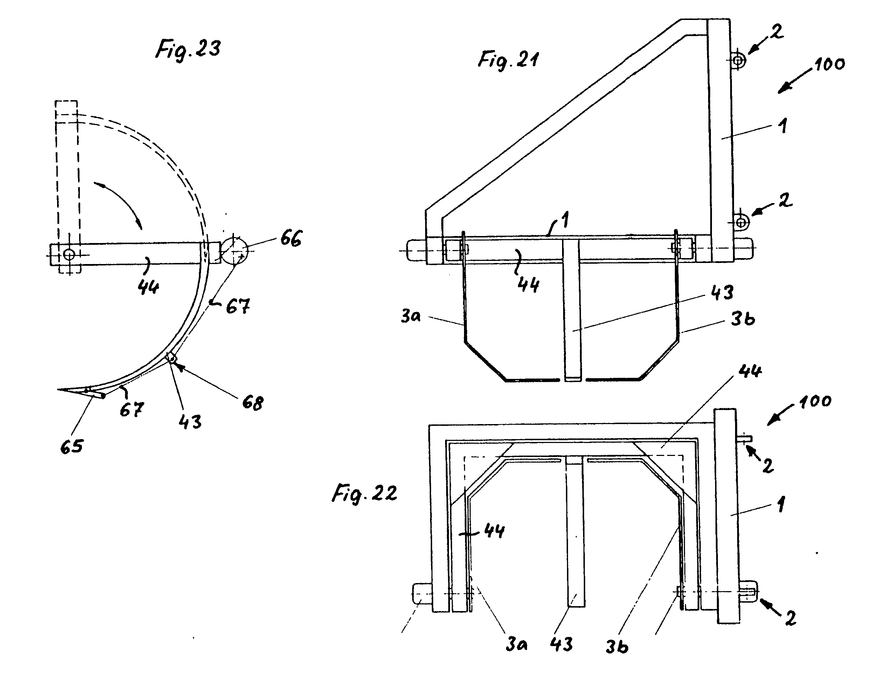

Fig. 22
eine Aufsicht des in Fig. 21 gezeigten Gerätes,

Fig. 23
eine Seitenansicht des Auflockerungspornes,

Fig. 24 und 25
Seitenansichten eines Vorschneidesech,

Fig. 26
eine perspektivische Ansicht eines Gerätes mit geteiltem Unterschneidemesser,

Fig. 27
eine perspektivische Ansicht der einen Hälfte eines geteilten Unterschneidemessers mit Antrieb,

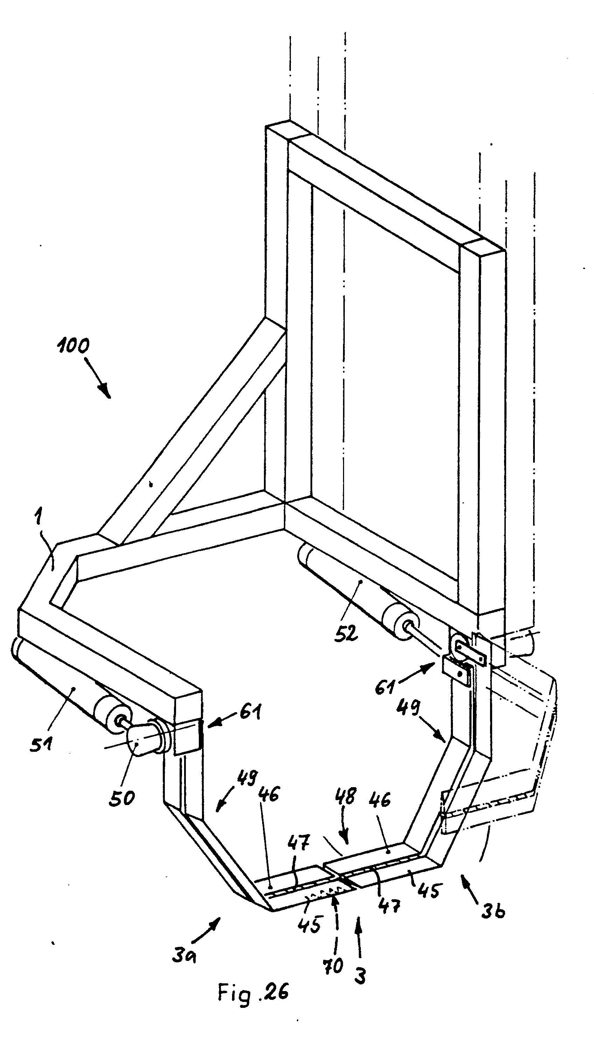

Fig. 28
eine Aufsicht des in Fig. 26 gezeigten Gerätes und

Fig. 29
eine Aufsicht eines Gerätes mit gegenläufigen Unterschneidemesser-Teilen.

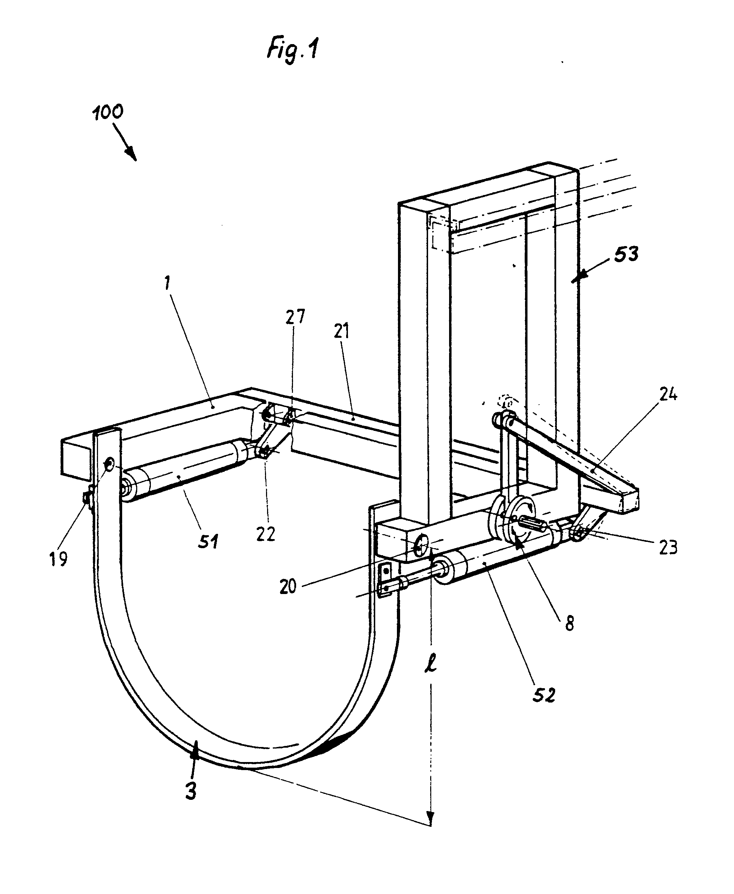

Ein in Fig. 1 gezeigtes Einzelballen-, Aushebe- und Reihenrodegerät - im weiteren Verlauf der Beschreibung kurz Gerät 100 genannt - weist einen Rahmen 1 als Trägergestell auf, welches in Aufsicht etwa U-förmig ausgebildet ist und an seinen freien Schenkelenden Lagerstellen 19 und 20 für ein Aushebemesser 3 aufweist. In Fig. 1 ist das Aushebemesser 3 als gerundeter Bügel ausgebildet. Die Länge 1 des Bügel-Messers 3 richtet sich nach der Größe des auszuhebenden Wurzelballens. Diese Länge bestimmt somit die Grabtiefe. An dem Aushebemesser 3 greifen Antriebe, im Ausführungsbeispiel nach Fig. 1 Hydraulikzylinder 51, 52 an, mittels denen das Aushebemesser 3 um etwa 180° verschwenkt werden kann. In Fig. 1 ist eine mittlere Lage des Messers dargestellt. Fig. 3 zeigt strichliniert etwa die Endlagen des Messers. An dem dem Messer abgewandten Ende der Hydraulikzylinder 51, 52 sind diese an einen Schwingbalken 21 angeschlossen, welcher mittels einer Exzenteranordnung 8 in hin- und herschwingende Bewegungen versetzt wird. Der Schwingbalken 21 ist über Scharniere 27 mit dem Rahmen 1 verbunden. An dem Schwingbalken 21 sind Anschlußhebel 22, 23 angebracht, an denen die Hydraulikzylinder 51, 52 angeschlossen sind. Durch die Exzenteranordnung 8 werden die Hydraulikzylinder 51, 52 in schwingende Bewegung versetzt, so daß sie zusätzlich zu ihrer Hubbewegung zur Bewegung des Aushebemessers 3 dieses auch noch in eine schwingende Bewegung versetzen. Das Durchdringen des Erdreiches wird dadurch wesentlich erleichtert.

An dem Rahmen 1 ist noch ein Rahmenteil 53 angebracht, welches Anschlußstellen zum Anbringen an einem Fahrzeug, insbesondere einem Schlepper, aufweisen kann. Beispielsweise ist in Fig. 3 ein Rahmenteil 53 mit Anschlüssen 2 vorgesehen, die an Dreipunktaufhängungen eines Schleppers passen. Die Verbindung erfolgt dabei auf einfache Weise mittels Steckbolzen.

Die Figuren 2 und 3 sowie 6 zeigen eine gegenüber Fig. 1 abgewandelte Ausführungsform eines Gerätes 100, bei dem das Aushebe- oder Unterschneidemesser 3 einseitig gelagert ist. Die Figuren 2 und 3 zeigen den Anbau des Aushebemessers längs zur Fahrtrichtung. Das Aushebemesser 3 ist hierbei an einer von Lagern 5 getragenen Welle 4 befestigt. Die Welle 4 ist mit den Lagern 5 an einer Quer- oder Trägerschiene 6 angeordnet, welche selbst bei den Lagerstellen 7 schwenkbar mit dem Rahmen 1 verbunden ist. Über die Exzenteranordnung 8 und den Hebel 9 kann die Trägerschiene 6 in oszillierende Bewegung um die Lagerstelle 7 versetzt werden.

Zur Schwenkbewegung des Aushebemessers 3 dient der Hydraulikzylinder 10, der einerseits über einen Hebel 11 mit der Welle 4 und andererseits an der Trägerschiene 6 befestigt ist.

Anstatt des Hydraulikzylinders 10 kann ggf. auch ein Getriebe, insbesondere ein Schneckengetriebe in Verbindung mit einem Hydraulikmotor oder einem Hydraulikzylinder mit Zahnstange und Ritzel eingesetzt werden.

Am Rahmen 1 ist noch ein Schild 14 angebracht, welches in vertikaler Richtung verstellt werden kann. Es kann mit Hilfe der Schlepperhydraulik bis zur Querplatte 15 ins Erdreich gedrückt werden, um die Standfestigkeit des Gerätes zu erhöhen und um gleichzeitig die passende Arbeitstiefe zu fixieren.

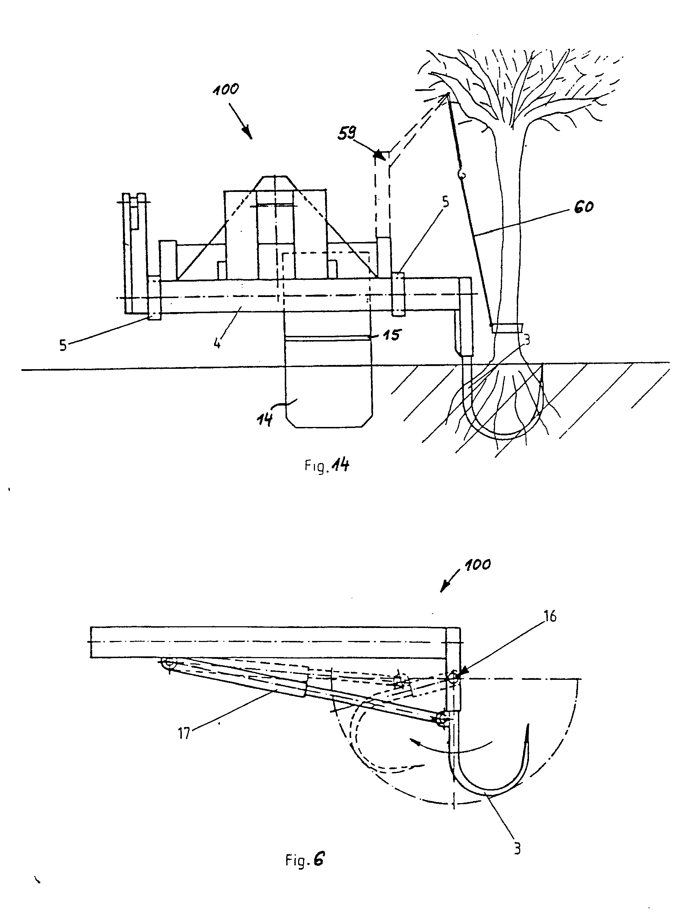

Fig. 6 zeigt noch eine Ausführungsform des Gerätes 100, bei dem das Aushebemesser 3 quer zu seiner Arbeits-Schwenkbewegung um ein Gelenk 16 aus dem Arbeitsbereich herausgeschwenkt werden kann. Das Aushebemesser kann dadurch bei einer Pflanzreihe zwischen die Pflanzen eingeschwenkt werden. Zum Verschwenken dient ein Hydraulikzylinder 17.

Die Figuren 4 und 5 zeigen ein Gerät 100, bei dem das Aushebemesser quer zur Fahrtrichtung angeordnet ist. Insbesondere ist diese Anordnung vorgesehen, wenn größere Wurzelballen unterschnitten bzw. ausgehoben werden müssen. Dementsprechend ist hier auch das Aushebemesser 3 größer und wegen der auftretenden Kräfte auch beidseitig gelagert und angetrieben. Etwa vergleichbar mit Fig. 1 sind auch hier beidseits an den oberen Enden des Aushebe- bzw. Unterschneidemessers 3 Lagerstellen 19, 20 vorgesehen.

In diesem Ausführungsbeispiel sind als Antrieb für das Aushebemesser 3 Hydraulikmotoren 25, 26 vorgesehen, an die Schneckengetriebe 28, 29 angeschlossen sind. Die Lagerstellen 19, 20 befinden sich an den Enden von Schwinghebeln 30, welche über Lagerstellen 7 mit dem übrigen Rahmen 1 verbunden sind. An den Schwinghebeln 30 ist ein Hebel 24 angebracht, an dem die Exzenteranordnung 8 mit einem Hebel 54 angreift. Die Schwinghebel 30 und somit das Aushebemesser 3 können so in eine schwingende Bewegung versetzt werden.

Die Figuren 7 bis 11 zeigen ein Gerät 100, bei dem die der Arbeitsbewegung des Aushebemessers überlagerte Schwingbewegung od. dgl. mit Hilfe einer Unwuchtwelle 55 erzeugt wird.

Bei der Ausführungsform nach Fig. 7 und 8 wird die Antriebsbewegung für die Unwuchtwelle 55, die hier an dem Aushebemesser 3 direkt angebracht ist, über ein Winkelgetriebe 31 und nachgeschaltete Übertragungselemente angetrieben. Das Winkelgetriebe kann mit der Zapfwelle eines Schleppers verbunden sein. Hinter dem Winkelgetriebe ist eine Übertragungswelle 32 mit einer Keilscheibe 34 angeschlossen. Die Übertragungswelle 32 ist in einem Lager 33 gelagert. Von der Keilscheibe 34 erfolgt mittels eines Keilriemens 35 eine Übertragung auf eine weitere Keilscheibe 36, die mit einer daneben angeordneten Keilscheibe 38 verbunden ist. Zwischen den beiden Keilscheiben 36 und 38 befindet sich ein Lager 37. Von der Keilscheibe 38 wird schließlich die Antriebsbewegung über einen Keilriemen 39 auf eine die Unwuchtwelle 55 antreibenden Keilscheibe 40 übertragen. Durch diese Zusatzantriebs-Übertragung kann das Aushebemesser 3 einerseits seine Arbeitsschwenkbewegung ausführen und zusätzlich ist auch die Übertragung der Antriebsbewegung auf die Unwuchtwelle 55 unabhängig von der Arbeitsstellung des Messers möglich.

In der Seitenansicht gemäß Fig. 8 ist einerseits die Anordnung der Übertragungsglieder für die Antriebsbewegung der Unwuchtwelle 55 erkennbar und außerdem sind hier strichliniert die End-Arbeitsstellungen des Aushebemessers 3 angedeutet.

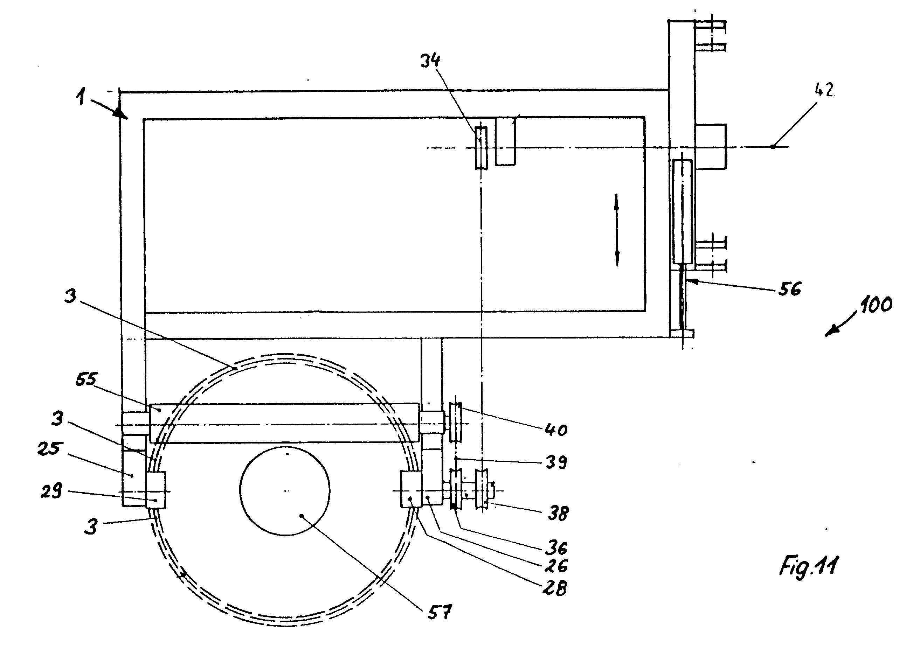

Bei den Ausführungsformen gemäß Fig. 9 bis 11 ist das Aushebemesser quer zur Fahrtrichtung eines Schleppers für das Gerät 100 angeordnet. Es ist hier wiederum ein beidseitig gelagertes Aushebemesser 3 vorgesehen. Die Unwuchtwelle 55 ist hier über die Breite des Messers verlaufend angeordnet. Der Antrieb dieser Unwuchtwelle erfolgt prinzipiell wie in Verbindung mit Fig. 7 und 8 beschrieben, wobei hier jedoch der Antrieb über eine Zapfwelle 42 (vgl. Fig. 11) praktisch in umgekehrter Richtung über die Keilscheiben 34, 38, 36 und 40 erfolgt.

Mit einer handelsüblichen Verschiebevorrichtung kann das gesamte Gerät mit einem in Fig. 11 gezeigten Hydraulikzylinder 56 zwischen die einzelnen Bäume 57 ein- und ausgefahren werden. Diese Verschiebevorrichtung kann bei allen Ausführungsvarianten des Gerätes 100 verwendet werden.

In Verbindung mit der Unwuchtwelle 55 (vgl. Fig. 7 bis 11) sei noch erwähnt, daß für schwere, bindige Bodenverhältnisse die Unwuchtwelle mit geringer Drehzahl gefahren wird, so daß sie eine schlagende Wirkung auf das Schneidmesser erzeugt.

Für leichte, sandige Bodenverhältnisse kann die Unwuchtwelle mit hoher Drehzahl gefahren werden und erzeugt dann eine vibrierende Wirkung auf das Schneidmesser. Die Drehzahlregulierung der Unwuchtwelle 55 kann über die Drehzahlregulierung des Fahrzeugmotors oder über ein Mengenregelventil bei Verwendung eines hydraulischen Antriebes erfolgen.

Wie in Fig. 11 erkennbar, ist die Unwuchtwelle 55 zu der Schwenkachse (Welle 4) des Aushebemessers 3 etwas seitenversetzt, so daß dem Aushebemesser durch die Vibration der Unwucht ein Drall in Vorwärtsrichtung des Messers versetzt wird. Durch die erzeugte Vibrationsbewegung und den zusätzlichen Druck der Arbeitsbewegungs-Antriebe des Aushebemessers 3 können selbst an kleineren Trägerfahrzeugen, z.B. Schmalspurschleppern od dgl. größere Ballenschneidemesser (Aushebemesser 3) verwendet werden und damit auch größere Bäume mit Wurzelballen ausgehoben werden.

Das Gerät 100 kann durch Anbringen entsprechender Halterungen auch an der Ladeschwinge von Schaufelladern, Laderaupen und Frontladern von Ackerschleppern angebracht werden. Wie bereits vorerwähnt, kann der Antrieb der Unwuchtwelle 55 über einen Hydraulikmotor erfolgen.

Mit den an der Maschine verwendeten Unwuchtwellen können je nach Drehzahl der Welle von 1500 - 5000 Umdrehungen, Schlagkräfte von z.B. 2000 - 6000 kp erreicht werden und somit eine einwandfreie Rode-, Unterschneide- bzw. Aushebearbeit auch mit leichten Schleppern ermöglicht werden.

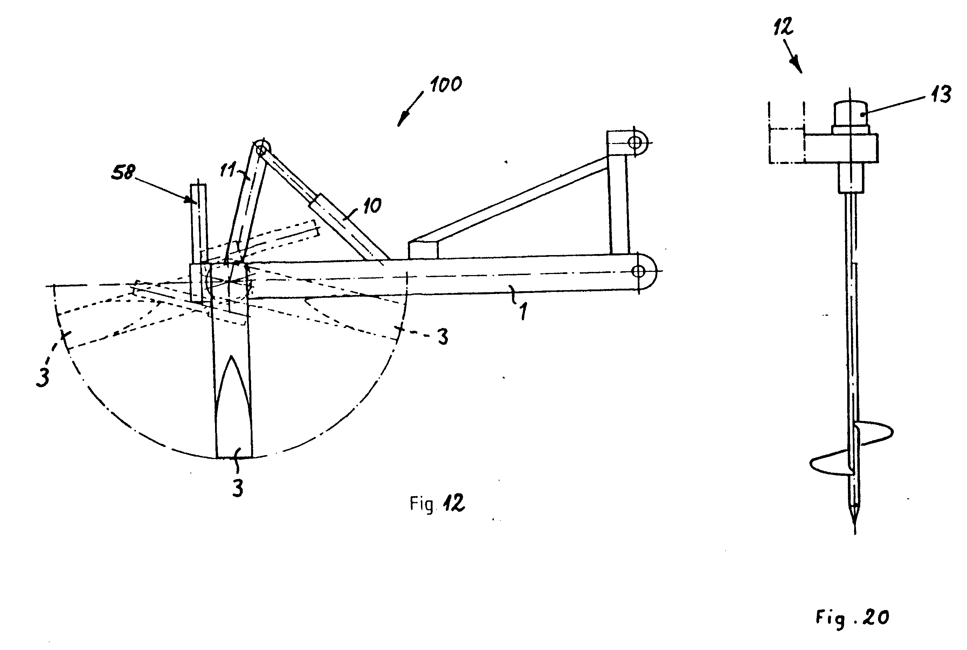

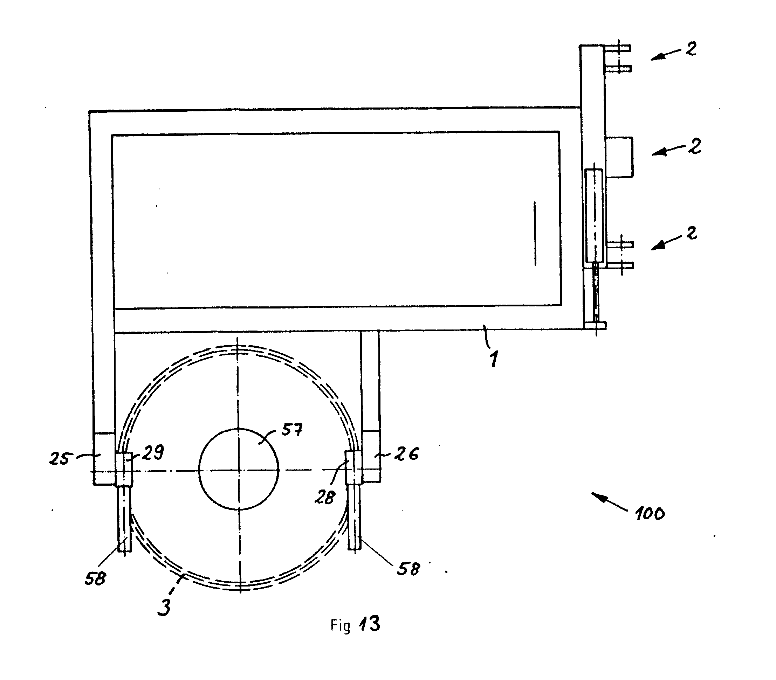

Gemäß Fig. 12 ist das Aushebemesser längs zur Fahrtrichtung angeordnet, während gemäß Fig. 13 das Unterschneidemesser quer zur Fahrtrichtung angeordnet ist.

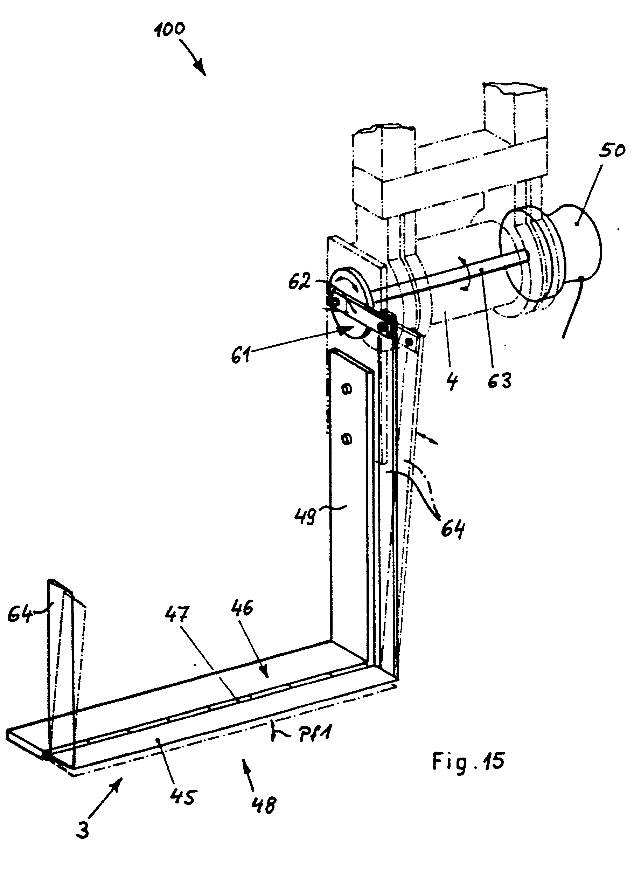

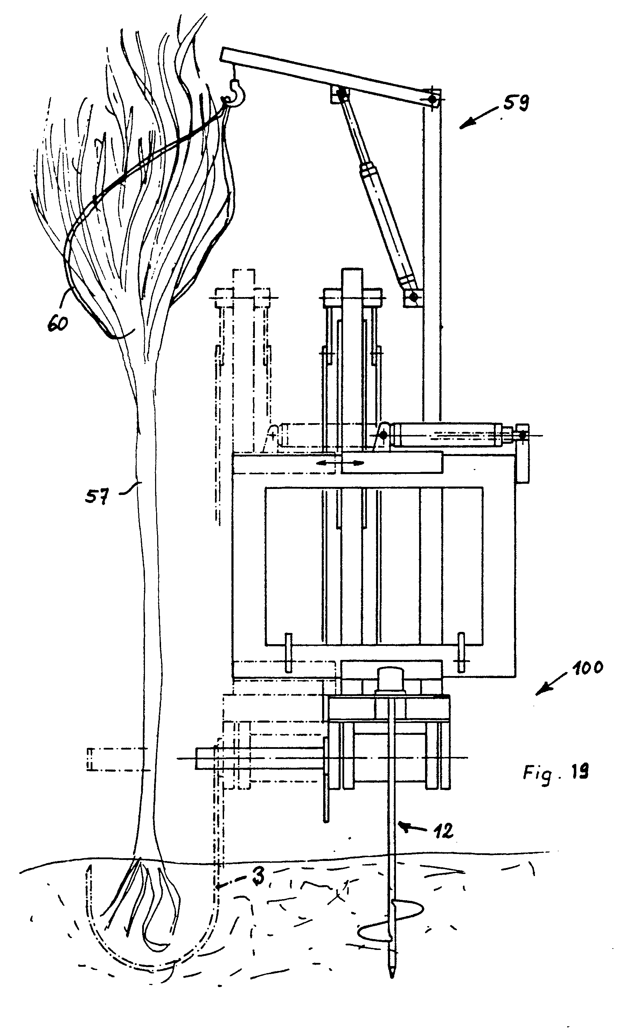

Fig. 14 zeigt eine weitere Ausführungsvariante eines Gerätes 100, bei dem am Grundrahmen 1 ein Schwenkkran 59 angebracht ist (vgl. auch die Figuren 18 und 19). Der auszuhebende Baum wird über ein Kordelband 60 mit dem Kran 59 verbunden.

Die Kranverbindung dient einerseits dazu, den unterschnittenen Baum ausheben zu können; andererseits bildet die Verbindung auch ein Wiederlager beim Unterschneidevorgang, wobei dies insbesondere beim ersten Eindringen des Unterschneidemessers in den Boden von Bedeutung ist. Es wird nämlich dadurch verhindert, daß das Gerät 100 vom Erdboden abhebt. In dieser Phase ist der Baum noch fest verwurzelt und bildet ein entsprechend stabiles Gegenlager. Nach dem Unterschneiden des Baumes oder der Pflanze kann diese mit dem Kran hochgehoben werden und es kann dann ein Ballentuch angebracht werden und schließlich kann der Baum auch auf ein Fahrzeug verladen werden.

Erwähnt sei noch, daß der Kran 59 nahe an dem Verankerungsschild 14 angebracht ist. Dadurch kann auch erreicht werden, daß das Abstützschild 14 durch Anziehen des mit einem Baum verbundenen Kranes 59 das Schild 14 bis zu der Querplatte 15 in den Boden eingedrückt und in dieser Stellung festgehalten wird.

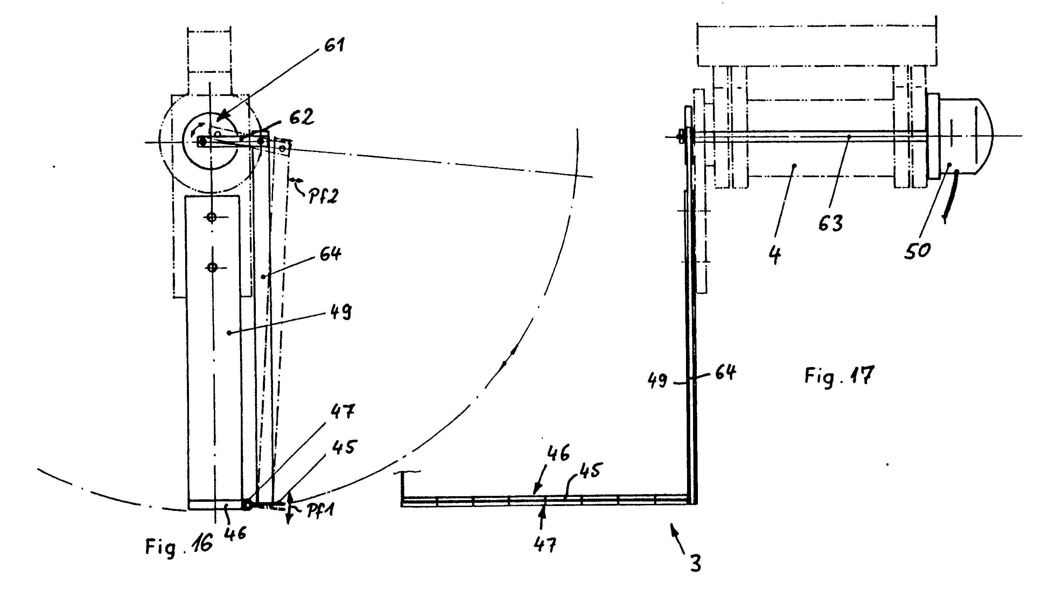

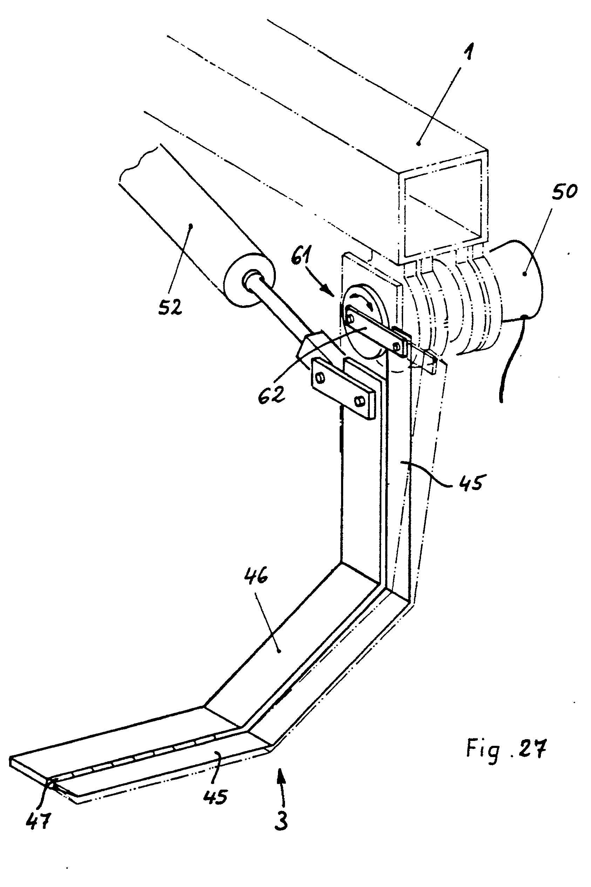

Die Figuren 15 bis 17 sowie 26 bis 29 zeigen eine besonders vorteilhafte Ausgestaltung der Erfindung. Demgemäß ist das Aushebe- oder Unterschneidemesser 3 mit einer beweglichen Schneide 45 versehen, welche mit einem Antrieb für eine Wippbewegung entsprechend dem Doppelpfeil Pf 1 in Fig. 15 verbunden ist.

In diesem Falle weist das Unterschneidemesser 3 ein Trägerteil 46 auf, an dem über ein Scharnier 47 die Schneide 45 beweglich angebracht ist. Für eine einfache Anlenkung der Schneide 45 ist das Aushebemesser L- oder U-förmig als Bügel zumindest mit einem Bodenteil 48 und einem oder mehreren Seitenteilen 49 ausgebildet. Dabei ist insbesondere das Bodenteil 48, an dem auch das Scharnier 47 angebracht ist, gerade ausgebildet. Die bewegliche Schneide 45 ist in Vorschubrichtung des Messers 3 etwa fluchtend vor dem Trägerteil 46 angeordnet und hat somit auch dessen Form. Die über den Scharnierverbindungsbereich sich bis zur Lagerung des Messers erstreckenden Fortsätze der Schneide 45 dienen zur Übertragung der Wippbewegung von einem etwa bei der Schwenklagerung 5 des Messers angeordnetem Antrieb, z.B. einem Hydraulikmotor 50 auf den übrigen Bereich der Schneide. Der Hydraulikmotor 50 ist mit einer Exzenteranordnung 61 verbunden, von dem über einen Hebel 62 eine etwa rechtwinklig zur Scharnierachse verlaufende Antriebsbewegung auf die Schneide 45 übertragen wird.

Die Verbindung zwischen dem Hydraulikmotor 50 und der Exzenteranordnung 61 kann über eine koaxial zu der Verschwenk-Welle 4 des Messers verlaufende Antriebswelle 63 erfolgen.

Bei der Ausführungsform gemäß Fig. 15, wo das Trägerteil 46 des Messers L-förmig und die Schneide 45 etwa U-förmig ausgebildet sind, führt das am Bodenteil 48 angebrachte Schneidenteil eine Wippbewegung in vertikaler Richtung gemäß dem Pfeil Pf 1 aus, während die Seitenteile 64 der Schneide 45 etwa horizontale Bewegungen ausführen, wie dies strichpunktiert in Fig. 15 angedeutet ist (vgl. auch Fig. 16 mit Doppelpfeil Pf 2 sowie Fig. 17).

Bei den Ausführungsformen des Gerätes 100 gemäß Fig. 26 bis 29 sind die Seitenteile 49 des bzw. der Trägerteile 46 und auch die Seitenteile 64 der Schneide 45 abgewinkelt mit einem schrägen Verbindungsteil zwischen dem vertikalen Seitenteil und dem Bodenteil 48 ausgebildet. Dadurch ist eine genauere Anpassung der Messerform an den auszuschneidenden Wurzelballen vorhanden.

Die vorbeschriebene Ausführungsform des Gerätes 100 mit einer Wippenschneide 45 am Aushebemesser 3 hat sich in praktischen Versuchen als besonders vorteilhaft gezeigt, wobei auch gut ein Eindringen in schwere Böden möglich war.

Erwähnt sei noch, daß zusätzlich oder anstatt des Schildes 14 auch ein Schneckeneindrehanker 12 wie in den Figuren 19 und 20 gezeigt, zur Stabilisierung und Halterung des Gerätes vorgesehen sein kann. Der Schneckeneindrehanker 12 kann mit einem Antrieb 13 in das Erdreich eingedreht werden und hat die Aufgabe, beim Unterschneidevorgang das Gerät 100 am Boden festzuhalten, bzw. die Vertikal- sowie bei entsprechender Bauart auch die Horizontalkräfte mit abzufangen.

Die Figuren 21, 22 sowie 26, 28 und 29 zeigen Ausführungsformen des Gerätes 100, bei denen das Aushebe- bzw. Unterschneidemesser 3 durch zwei geteilte Einheiten 3a, 3b gebildet ist, wobei jede Seite einen separaten Schwenkantrieb sowie ggf. auch separate Zusatzantriebe für die überlagerte Bewegung der Messerteile bzw. seiner Schneiden aufweist. Durch diese Bauform ist auch ein Unterschneiden von sehr großen Wurzelballen bzw. ein Unterschneiden bei harten Böden möglich. Problematisch ist hierbei nämlich die rückwirkende Reaktionskraft, die von dem Gerät 100 sowie dem damit verbundenen Fahrzeug (Schlepper) abgefangen werden muß. Durch Aufteilung des Aushebemessers 3 in zwei Einheiten besteht nun die Möglichkeit, nur jeweils eine Hälfte des Messers arbeiten zu lassen. Dadurch ergeben sich wesentlich geringere - praktisch die halben - Rückwirkungskräfte, die auch gut von kleineren Fahrzeugen abgefangen werden können. Die Messereinheiten können im Taktverfahren abschnittweise nacheinander betätigt werden oder aber jeweils in einem durchgehenden Durchlauf unterschneiden.

Fig. 26 zeigt bei der Schneide 45 der Messereinheit 3a angedeutet eine Zahnung 70 oder dgl. Schneidprofilierung, die einerseits das Durchdringen des Bodens, insbesondere aber das Durchtrennen von Wurzeln erleichtert. Die Zahnung 70 kann sich über einen Teil der Schneide, z. B. im Bereich des Bodenteiles 48 oder aber über die ganze Länge erstrekken. Die einzelnen Zahnflanken können als angeschliffene Schneidkanten ausgebildet sein.

Vorteilhafter ist hierbei das Taktverfahren, wo die Messereinheiten schrittweise abwechselnd vorwärts bewegt werden. Die jeweils stehende Messereinheit bildet hierbei nämlich zusätzlich eine Verankerung des Gerätes bei der Bewegung der anderen Messereinheit. Dies ergibt ein Wechselspiel, welches insbesondere die nach außen wirkenden Kräfte erheblich reduzieren.

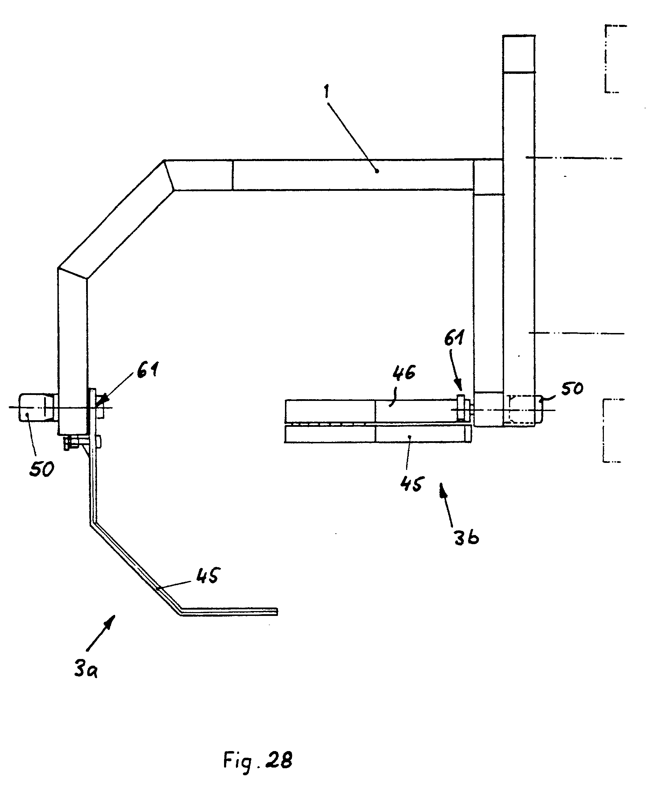

Fig. 28 zeigt eine Aufsicht eines Gerätes, bei dem die linke Messereinheit bereits einen Durchlauf hinter sich hat und mit der Schneide nach oben weist. Die rechte Messereinheit befindet sich hier noch an der tiefsten Unterschneidestelle.

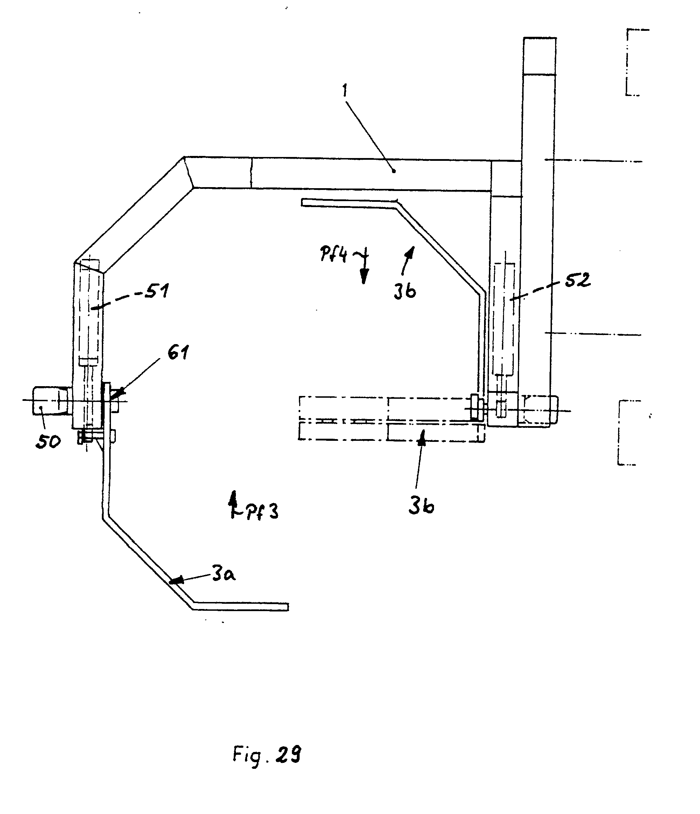

Eine weitere, vorteilhafte Ausführungsform eines erfindungsgemäßen Gerätes ist in Fig. 29 gezeigt. Die beiden Messereinheiten 3a, 3b haben hierbei entgegengesetzte Vorschub-Schwenkrichtungen, was durch die Pfeile Pf 3 und Pf 4 angedeutet ist. Bei dieser Arbeitsweise ergeben sich während des Arbeitsdurchlaufes, wo die Messereinheiten greiferartig gegeneinander laufen, praktisch keine Horizontalkräfte. Bei dieser Anordnung können die Messereinheiten gleichmäßig gegeneinander laufen oder aber auch stufenförmig, wobei die Bewegungsabschnitte jeweils gleichzeitig liegen.

Die Ausführungsform des Gerätes 100 mit wippender Schneide 45 bei dem Aushebemesser 3 bzw. den Messereinheiten 3a, 3b hat noch den Vorteil, daß diese Wippbewegung innerhalb des gesamten Arbeits-Schwenkbereiches erfolgen kann. Bei den anderen Ausführungsformen des Gerätes 100 mit einer Unwuchtwelle 55 und dergleichen ist die Zusatzbewegung vor allem in der ersten Arbeitsbewegungsphase beim Eindringen des Umschneidemessers 3 bzw. der Messereinheiten 3a, 3b in den Boden wirksam.

Auch ein in den Fig. 12 und 13 gezeigter Rammhammer 58 kann das erste Eindringen des Unterschneidemessers 3 vereinfachen.

Fig. 18 zeigt eine Anordnung mit einem Rammhammer 58, der an einem Parallelogrammgestänge 18 befestigt ist und über einen Hebel auf das Unterschneidemesser 3 schlägt.

Die Figuren 21 bis 23 zeigen eine Ausführungsform eines Gerätes 100 mit einem Auflockerungssporn 43, welcher zwischen den beiden Unterschneidemesser-Einheiten 3a, 3b angeordnet ist. Dieser Auflockerungssporn 43 wird bei besonders schwierigen Bodenverhältnissen eingesetzt, um das Erdreich zumindest in einem mittleren Bereich des zu unterschneidenden Ballens aufzulockern. Der Auflockerungssporn 43 ist an einem Schwenkrahmen 44 befestigt, der etwa U-förmig ausgebildet ist und bei den Lagerstellen 19, 20 des Messers 3 bzw. der Messereinheiten 3a, 3b gelagert ist.

In Fig. 23 ist erkennbar, daß der Auflockerungssporn 43 etwa vergleichbar mit dem Messer 3 z. B. in Fig. 26 mit einer Wippenschneide ausgerüstet ist, die hier als Wippschar 65 ausgebildet ist. Die Bewegungsübertragung erfolgt von einem Zusatzantrieb 66 mit einer Exzenteranordnung über ein Gestänge 67 zu der Wippschar 65. Mit 68 ist noch ein Zwischenlager für das Gestänge 67 bezeichnet.

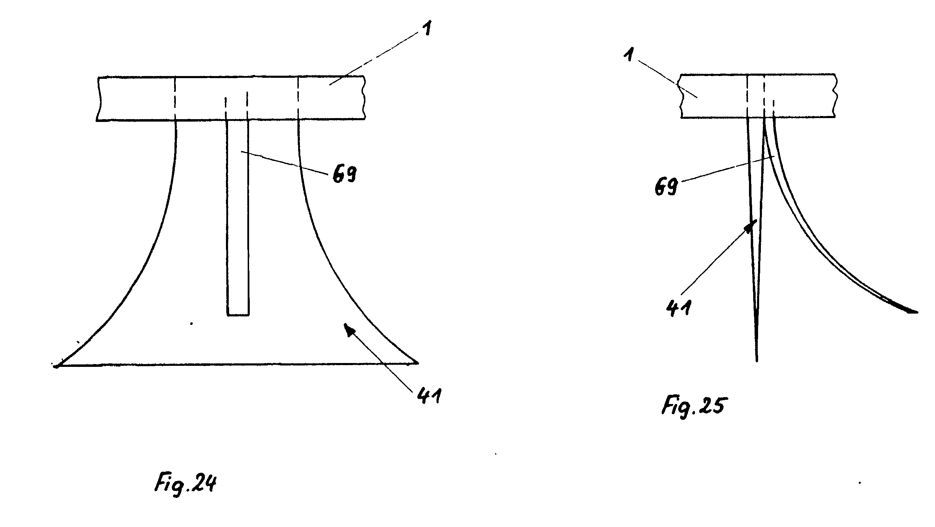

Am Grundrahmen 1 kann seitenverstellbar vor dem Unterschneide- bzw. Aushebemesser 3 ein Vorschneidesech 41 angebracht sein, wie in Fig. 24 und 25 dargestellt. Dieses Sech 41 weist im Ausführungsbeispiel ein Nebensech 69 auf und dient dabei zum einen als Schild zur Abstützung der Horizontalkräfte und andererseits auch zum Vorschneiden der Eindringstelle des Aushebe- und Unterschneidemessers 3.

Beim Unterschneiden eines Baumes wird das Gerät 100 je nach Bodenart ein bis zwei Meter vor dem zu unterschneidenden Baum abgesenkt und durch Seitenverfahren des Trägergerätes und auch durch die Bauart des Sechs auf die gewünschte Tiefe eingefahren.

## Patentansprüche

1. Einzelballen-, Aushebe- und Reihenrodegerät mit einem Unterschneidemesser (3) welches in Eindringrichtung schwenkbar um eine etwa horizontale Achse gelagert ist, insbesondere zum Herauslösen des Wurzelwerkes von Pflanzen in Baumschulen oder dergleichen, wobei ein Zusatzantrieb (8, 55, 61) für eine die Schwenkbewegung überlagernde, oszillierende Bewegung des Unterschneidemessers (3) vorgesehen ist, **dadurch gekennzeichnet,** daß der Zusatzantrieb (8, 55) derart ausgebildet ist, daß das Unterschneidemesser (3) in Eindringrichtung vor- und zurückbewegbar ist, oder daß das Unterschneidemesser (3), in Eindringrichtung an seiner Vorderseite, wenigstens eine, um eine Achse quer zur Eindringrichtung bewegliche Schneide aufweist, die durch den Zusatzantrieb (61) in eine Wippbewegung versetzbar ist.

2. Gerät nach Anspruch 1, dadurch gekennzeichnet, daß der Zusatzantrieb eine am Antrieb für die Schwenkbewegung angreifende Exenteranordnung (8) für eine vor- und zurückschwingende Bewegung des Unterschneidemessers (3) oder eine an einem Schwinghebel (6, 30) angreifende Exenteranordnung (8) für eine im wesentlichen vibrierende Zusatzbewegung aufweist.

3. Gerät nach Anspruch 1, dadurch gekennzeichnet, daß das Unterschneidemesser (3) mit einer Unwuchtwelle (55) oder dergleichen verbunden ist, welche das Unterschneidemesser in schwingende beziehungsweise vibrierende Bewegung versetzt.

4. Gerät nach einem der Ansprüche 1 bis 3, dadurch gekennzeichnet, daß die überlagerte Vor- und Zurückbewegung, die Vibrationsbewegung und die Wippbewegung des Unterschneidemessers (3) einzeln oder in Kombination vorgesehen sind.

5. Gerät nach einem der Ansprüche 1 bis 4, dadurch gekennzeichnet, daß ein etwa senkrechtes, in den Boden eintreibbares Schild (14) zur Abstützung der Horizontalkräfte vorgesehen ist, zur Stabilisierung des Gerätes in Arbeitsstellung.

6. Gerät nach einem der Ansprüche 1 bis 5, dadurch gekennzeichnet, daß am Grundrahmen des Gerätes ein Schneckeneindrehanker (12) zur Aufnahme von Vertikalkräften angebracht ist.

7. Gerät nach einem der Ansprüche 1 bis 6, dadurch gekennzeichnet, daß die Schwenkachse des Messers (3) längs zur Fahrtrichtung eines Schleppers oder dergleichen Trägerfahrzeuges angeordnet ist.

8. Gerät nach einem der Ansprüche 1 bis 7, dadurch gekennzeichnet, daß das Unterschneidemesser (3) im wesentlichen etwa L- oder U-förmig als Bügel zumindest mit einem Bodenteil (48) und einem Seitenteil (49) ausgebildet ist.

9. Gerät nach einem der Ansprüche 1 bis 8, dadurch gekennzeichnet, daß das Unterschneidemesser (3) wenigstens ein Trägerteil (46) mit einem oder mehreren geraden Bereich aufweist, in denen bewegliche Schneiden (45) angeordnet sind.

10. Gerät nach einem der Ansprüche 1 bis 9, dadurch gekennzeichnet, daß die bewegliche Schneide (45) in Vorschubrichtung des Messers (3) etwa fluchtend vor dem Trägerteil (46) angeordnet ist.

11. Gerät nach Anspruch 9 oder 10, dadurch gekennzeichnet, daß das Trägerteil (46) und die Schneide (45) vorzugsweise im Bereich des Bodenteiles (48) des Unterschneidemessers (3) über ein dazwischen befindliches Scharnier (47) verbunden sind.

12. Gerät noch einem der Ansprüche 9 bis 11, dadurch gekennzeichnet, daß die Schneide (45) über den Scharnier-Verbindungsbereich vorzugsweise sich bis zur Lagerung (19 bzw. 20) des Unterschneidemessers (3) erstreckende Fortsätze aufweist, und daß zumindest an einem lagerseitigen, äußeren Ende der Schneide (45) ein Antrieb (61) zur oszillierenden Schwenk-bzw. Wippbewegung der Schneide (45) um ihre Scharnierachse angreift.

13. Gerät nach Anspruch 12, dadurch gekennzeichnet, daß als Wipp-Antrieb für die Schneide (45) wenigstens eine Erzenteranordnung (61) vorzugsweise mit koaxial zur Schwenkachse (4) des Unterschneidemessers (3) angeordnete Antriebswelle (63) vorgesehen ist.

14. Gerät nach einem der Ansprüche 1 bis 13, dadurch gekennzeichnet, daß das Unterschneidemesser (3) durch wenigstens zwei geteilte Einheiten (3a, 3b) gebildet ist und daß jede Seite einen separaten Schwenkantrieb sowie gegebenenfalls einen separaten Zusatzantrieb für die überlagerte Bewegung des Messers bzw. seiner Schneiden aufweist.

15. Gerät nach Anspruch 14, dadurch gekennzeichnet, daß die beiden Messereinheiten (3a, 3b) jeweils im wesentlichen etwa L-förmig mit zueinander gewandten Bodenteilen (48) ausgebildet sind.

16. Gerät nach Anspruch 14 oder 15, dadurch gekennzeichnet, daß die Messereinheiten (3a, 3b) gegenläufig mit entgegengesetzten Vorschub-Schwenkrichtungen ausgebildet sind.

17. Gerät nach einem der Ansprüche 1 bis 15, dadurch gekennzeichnet, daß ein um eine etwa horizontale Achse schwenkbarer Auflockerungssporn (43) vorgesehen ist, der einen Schwenkantrieb (66) und vorzugsweise eine Exzenteranordnung für eine überlagerte Bewegung des Sporns bzw. einer an dessen Ende angeordneter Wippschar (65) aufweist.

18. Gerät nach einem der Ansprüche 1 bis 17, dadurch gekennzeichnet, daß ein Vorschneidesech (41) vorgesehen ist, welches vorzugsweise am Grundrahmen (1) angebracht ist und gleichzeitig zur Abstützung von Horizontalkräften dient.

19. Gerät nach einem der Ansprüche 1 bis 18, dadurch gekennzeichnet, daß am Rahmen (1) des Gerätes (100) ein Schwenkkran (59) oder dergleichen zur Aufnahme von Vertikalkräften sowie zum Anheben unterschnittener Bäume und dergleichen angebracht ist.

20. Gerät nach einem der Ansprüche 1 bis 19, dadurch gekennzeichnet, daß das Unterschneidemesser (3) um eine quer zur Schwenkachse verlaufende Gelenkachse (16) vorzugsweise mittels eine Hydraulikzylinders (17) verstellbar ist.

**Claims**

1. A device for excavation with a ball of soil and stubbing device for row plants, including an undercutting knife (3) which is mounted about an approximately horizontal axis so as to be capable of swivelling in the direction of penetration, particularly for extracting the root system of plants in nurseries or the like, an accessory drive (8, 55,61) being provided for the undercutting knife (3) to perform an oscillating movement superimposing the swivel movement, characterized in that the accessory drive (8, 55) is devised in such a way that the undercutting knife (3) is movable back and forth in the direction of penetration, or that the undercutting knife (3) has, in the direction of penetration at the front thereof, at least one cutting face which is movable about an axis transversely to the direction of penetration and is adapted to be set into a rocking movement by the accessory drive (61).

2. A device as claimed in claim 1, characterized in that the accessory drive has an eccentric arrangement (8) which acts on the drive for the swivel movement and serves for the undercutting knife (3) to perform a reciprocating movement, or an eccentric arrangement (8) which acts on a rocking lever (6, 30) and serves for an essentially vibrating additional movement.

3. A device as claimed in claim 1, characterized in that the undercutting knife (3) is connected to an unbalanced shaft (55) or the like vibrating the undercutting knife.

4. A device as claimed in any one of claims 1 to 3, characterized in that the superimposed reciprocation, the vibrating movement and the rocking movement of the undercutting knife (3) are provided singly or in combination.

5. A device as claimed in any one of claims 1 to 4, characterized in that provision is made for an approximately vertical blade (14) which is adapted to be driven into the ground for supporting the horizontal forces, to stabilize the device in the working position.

6. A device as claimed in any one of claims 1 to 5, characterized in that a screw anchor (12) is fitted to the base frame of the device and serves to sustain vertical forces.

7. A device as claimed in any one of claims 1 to 6, characterized in that the swivel axis of the knife (3) is arranged longitudinally to the direction of travel of a tractor or like carrier vehicle.

8. A device as claimed in any one of claims 1 to 7, characterized in that the undercutting knife (3) is essentially devised to be approximately L or U-shaped as a bow at least with one bottom piece (48) and one side piece (49).

9. A device as claimed in any one of olaims 1 to 8, characterized in that the undercutting knife (3) has at least one carrier part (46) with one or more straight area(s) in which movable cutting faces (45) are arranged.

10. A device as claimed in any one of claims 1 to 9, characterized in that the movable cutting face (45) is arranged in the direction of feed of the knife (3) approximately in alignment in front of the carrier part (46).

11. A device as claimed in claim 9 or claim 10, characterized in that the carrier part (46) and the cutting face (45) are connected preferably in the area of the bottom piece (48) of the undercutting knife (3) by way of an intermediate hinge (47).

12. A device as claimed in any one of claims 9 to 11, characterized in that the cutting face (45) has over the area of the hinge linkage extensions preferably reaching to the support (19, 20) of the undercutting knife (3), and that a drive (61) for the cutting face (45) to perform an oscillating swivel or rocking movement about the hinge axis thereof acts on the cutting face (45) at least at one outer end thereof situated in the direction of the bearing.

13. A device as claimed in claim 12, characterized in that as a rocking drive for the cutting face (45) at least one eccentric arrangement (61) is provided preferably with a drive shaft (63) arranged coaxially to the swivel axis (4) of the undercutting knife (3).

14. A device as claimed in any one of claims 1 to 13, characterized in that the undercutting knife (3) is formed by at least two split units (3a, 3b) and that each side has a separate slewing drive as well as possibly a separate accessory drive for the superimposed movement of the knife or cutting faces thereof.

15. A device as claimed in claim 14, characterized in that the two knife units (3a, 3b) are in each case devised to be essentially approximately L-shaped with bottom pieces (48) facing one another.

16. A device as claimed in claim 14 or claim 15, characterized in that the knife units (3a, 3b) are devised to be working in opposite direction with opposite directions of swivel feed.

17. A device as claimed in any one of claims 1 to 15, characterized in that a loosening spur (43) adapted to swivel about an approximately horizontal axis is provided and has a slewing drive (66) and preferably an eccentric arrangement for a superimposed movement of the spur or a share (65) arranged at the end thereof.

18. A device as claimed in any one of claims 1 to 17, characterized in that a coulter (41) is provided which is preferably mounted to the base frame (1) and simultaneously serves to support horizontal forces.

19. A device as claimed in any one of claims 1 to 18, characterized in that a slewing crane (59) or the like is mounted to the frame (1) of the device (100) and serves to sustain vertical forces as well as to raise undercut trees and the like.

20. A device as claimed in any one of claims 1 to 19, characterized in that the undercutting knife (3) is adjustable about a joint axis (16) running transversely to the swivel axis, preferably by means of a hydraulic cylinder (17).

**Revendications**

1. Appareil à déplanter des végétaux en motte individuellement et en ligne, comprenant un couteau de découpage en dessous (3) qui est monté pivotant dans la direction de pénétration dans la terre autour d'un axe à peu près horizontal, en particulier pour détacher les racines de plantes dans les pépinières ou analogues, avec prévision d'une commande auxiliaire (8, 55, 61) pour un mouvement oscillant superposé au mouvement de pivotement du couteau de découpage en dessous (3), caractérisé en ce que la commande auxiliaire (8, 55) est réalisée de manière que le couteau de découpage en dessous (3) puisse être déplacé en avant et en arrière dans la direction de pénétration, ou que le couteau de découpage en dessous (3) présente sur son côté avant, dans la direction de pénétration, au moins un tranchant mobile transversalement à la direction de pénétration autour d'un axe et auquel la commande auxiliaire (61) peut conférer un mouvement de basculement.

2. Appareil selon la revendication 1, caractérisé en ce que la commande auxiliaire comporte un dispositif à excentrique (8) attaquant la commande pour le mouvement de pivotement et produisant un mouvement oscillant ou vibrant vers l'avant et l'arrière du couteau de découpage en dessous (3), ou un dispositif à excentrique (8) attaquant un levier oscillant (6, 30) et produisant un mouvement supplémentaire essentiellement vibrant.

3. Appareil selon la revendication 1, caractérisé en ce que le couteau de découpage en dessous (3) est relié à un arbre à balourd (55) ou un organe analogue qui confère à ce couteau un mouvement d'oscillation ou de vibration.

4. Appareil selon une des revendications 1 à 3, caractérisé en ce que le mouvement avant-arrière superposé, le mouvement vibrant et le mouvement basculant du couteau de découpage (3) sont prévus séparément ou en combinaison.

5. Appareil selon une des revendications 1 à 4, caractérisé en ce qu'il comprend une lame (14) à peu près verticale, pouvant être enfoncée dans le sol et destinée à former un appui à l'égard des forces horizontales, afin de stabiliser l'appareil en position de travail.

6. Appareil selon une des revendications 1 à 5, caractérisé en ce qu'une ancre (12), munie d'une hélice pour le vissage dans le sol, est prévue sur le bâti de base de l'appareil pour encaisser des forces verticales.

7. Appareil selon une des revendications 1 à 6, caractérisé en ce que l'axe de pivotement du couteau (3) est orienté longitudinalement, parallèlement au sens de marche d'un tracteur ou d'un véhicule porteur analogue.

8. Appareil selon une des revendications 1 à 7, caractérisé en ce que le couteau de découpage (3) est réalisé essentiellement en forme de L ou comme un étrier en forme de U et possède au moins une partie de fond (48) et une partie latérale (49).

9. Appareil selon une des revendications 1 à 8, caractérisé en ce que le couteau de découpage (3) présente au moins une partie de support (46) avec une ou plusieurs portions droites, sur lesquelles sont disposés des tranchants mobiles (45).

10. Appareil selon une des revendications 1 à 9, caractérisé en ce que le tranchant mobile (45) est disposé à peu près en alignement avec la partie de support (46), devant cette partie dans la direction d'avance du couteau (3).

11. Appareil selon la revendication 9 ou 10, caractérisé en ce que la partie de support (46) et le tranchant (45) sont de préférence reliés entre eux, dans la région de la partie de fond (48) du couteau (3), au moyen d'une charnière (47) interposée.

12. Appareil selon une des revendications 9 à 11, caractérisé en ce que le tranchant (45) présente des prolongements s'étendant au-delà de la zone de liaison à charnière, de préférence jusqu'au point de montage (19 ou 20) du couteau de découpage (3), et qu'une commande (61) pour le mouvement oscillant de pivotement ou de basculement du tranchant (45) autour de l'axe défini par sa charnière, attaque au moins une extrémité extérieure du tranchant (45) du côté du point de montage du couteau.

13. Appareil selon la revendication 12, caractérisé en ce que, pour la commande du mouvement de basculement du tranchant (45), on a prévu au moins un dispositif à excentrique (61), de préférence avec un arbre d'entraînement (63) disposé de préférence coaxialement à l'axe de pivotement (4) du couteau de découpage (3).

14. Appareil selon une des revendications 1 à 13, caractérisé en ce que le couteau de découpage en dessous (3) est constitué d'au moins deux unités divisées (3a, 3b) et que chaque côté présente une commande de pivotement séparée ainsi que, éventuellement, une commande auxiliaire séparée pour le mouvement superposé du couteau ou de ses tranchants.

15. Appareil selon la revendication 14, caractérisé en ce que les deux unités de découpage (3a, 3b) sont réalisées chacune sous une forme sensiblement en L avec des parties inférieures ou parties de fond (48) dirigées l'une vers l'autre.

16. Appareil selon la revendication 14 ou 15, caractérisé en ce que les unités de découpage (3a, 3b) sont réalisées comme des unités opposées ayant des directions d'avance-pivotement contraires.

17. Appareil selon une des revendications 1 à 15, caractérisé en ce qu'il comprend un éperon d'ameublissement (43) pivotant autour d'un axe à peu près horizontal, qui présente une commande de pivotement (66) et, de préférence, un dispositif à excentrique destinés à conférer un mouvement superposé à l'éperon ou à un soc monté basculant (65) sur son extrémité.

18. Appareil selon une des revendications 1 à 17, caractérisé en ce qu'il comprend un coutre de prédécoupage (41) qui est disposé de préférence sur le bâti de base (1) et sert en même temps d'appui à l'égard de forces horizontales.

19. Appareil selon une des revendications 1 à 18, caractérisé en ce qu'une grue pivotante (59) ou un engin semblable est prévu sur le bâti (1) de l'appareil (100) pour encaisser des forces verticales et soulever des arbres ou d'autres végétaux dont la motte a été découpée.

20. Appareil selon une des revendications 1 à 19, caractérisé en ce que le couteau de découpage (3) est déplaçable autour d'un axe d'articulation (16) transversal à l'axe de pivotement, de préférence au moyen d'un vérin hydraulique (17).

Fig.1

100

53

1

5

5

4

15

14

3

Fig. 2

100

11

10

9

53

2

4

2

8

1

3

6

7

14

15

Fig. 3

13

Fig.4

Fig.5

Fig. 14

Fig. 6

100

31    32    33    34    40    55

39

35

4

36    37    38

3

FIG. 7

40    34

55    100

39

35

4

3

FIG. 8

FIG. 9

FIG. 10

EP 0 316 830 B1

Fig.11

Fig. 12

Fig. 20

EP 0 316 830 B1

Fig 13

Fig.15

61

62

Pf2

64

49

47

45

Pf1

Fig. 16    46

46

Fig. 17

49    64

46

45

47

3

4

63

50

EP 0 316 830 B1

23

Fig. 18

Fig. 19

Fig.23

Fig.21

Fig.22

66

44

67

67

43

68

65

2

100

1

1

44

43

3a

3b

44

100

2

1

44

3a

43

3b

2

Fig.25

Fig.24

Fig .26

Fig. 27

Fig. 28

Fig. 29